# EUROPÄISCHE PATENTSCHRIFT

(11) **EP 3 512 387 B1**
(45) Veröffentlichungstag und Bekanntmachung des Hinweises auf die Patenterteilung: **05.08.2020**
(21) Anmeldenummer: 18779315.3
(22) Anmeldetag: 21.09.2018
(51) Int. Cl.: A47J 31/46, A47J 31/44, A47J 31/52

(54) **GETRÄNKEBEREITER UND VERFAHREN ZUR BESTIMMUNG VON DURCH EINEN GETRÄNKEBEREITER AUSGEGEBENEN UND/ODER IN DIESEM ZUR GETRÄNKEBEREITUNG VERWENDETEN HEISSWASSERMENGEN**
BEVERAGE MAKER AND METHOD FOR DETERMINING HOT WATER AMOUNTS OUTPUT BY A BEVERAGE MAKER AND/OR USED IN SAME FOR BEVERAGE PREPARATION
DISPOSITIF DE PRÉPARATION DE BOISSONS ET PROCÉDÉ POUR LA DÉTERMINATION DE QUANTITÉS D'EAU CHAUDE DISTRIBUÉES PAR UN DISPOSITIF DE PRÉPARATION DE BOISSONS ET/OU UTILISÉES DANS CELUI-CI POUR LA PRÉPARATION DE BOISSONS

(30) Priorität: 09.10.2017 DE 102017217953
(43) Veröffentlichungstag der Anmeldung: 24.07.2019
(73) Patentinhaber: WMF Group GmbH, 73312 Geislingen/Steige (DE)
(72) Erfinder: BAIS, Johannes, 89075 Ulm (DE); SCHIRRMACHER, Philipp, 89073 Ulm (DE); STARTZ, Armin, Weidenstetten 89197 (DE)
(74) Vertreter: Pfenning, Meinig & Partner mbB
(86) Internationale Anmeldenummer: PCT/EP2018/075573
(87) Internationale Veröffentlichungsnummer: WO 2019/072519

(56) Entgegenhaltungen:
- EP-A1- 1 893 063
- EP-A1- 2 526 841
- EP-A1- 2 612 577
- EP-A1- 2 954 811
- WO-A2-2011/151703
- DE-A1-102010 047 888
- US-A1- 2016 095 465
- US-A1- 2016 257 550

## Beschreibung

Die vorliegende Erfindung betrifft einen Getränkebereiter, welcher eine Heizeinrichtung zum Erhitzen von Wasser, einen Kaltwasserzulauf, einen ersten Heißwasserabgang, mindestens einen zweiten Heißwasserabgang, einen den Kaltwasserzulauf mit der Heizeinrichtung verbindenden Kaltwasserpfad, einen die Heizeinrichtung mit dem ersten Heißwasserabgang verbindenden ersten Heißwasserpfad, mindestens einen die Heizeinrichtung mit dem mindestens einen zweiten Heißwasserabgang verbindenden zweiten Heißwasserpfad, eine Fördereinrichtung zum Fördern von Wasser, einen ersten Durchflussmengenmesser, welcher im Kaltwasserpfad oder im ersten Heißwasserpfad angeordnet ist, und mindestens einen zweiten Durchflussmengenmesser, welcher im mindestens einen zweiten Heißwasserpfad angeordnet ist, umfasst. Hierbei ist jeder der zweiten Heißwasserabgänge über jeweils einen der zweiten Heißwasserpfade mit der Heizeinrichtung verbunden und es ist in jedem der zweiten Heißwasserpfade jeweils einer der zweiten Durchflussmengenmesser angeordnet. Mit dem erfindungsgemäßen Getränkebereiter wird die gleichzeitige oder zeitversetzte Ausgabe oder Zubereitung von zwei oder mehr Heißgetränken mit einer hohen Dosiergenauigkeit ermöglicht. Die vorliegende Erfindung betrifft zudem ein Verfahren zur Bestimmung von durch einen Getränkebereiter ausgegebenen und/oder in diesem zur Getränkebereitung verwendeten Heißwassermengen.

In Heißgetränkeautomaten wird zum Brühen von Kaffee Heißwasser mit einer vorbestimmten Temperatur und Menge benötigt. Das Wasser wird durch Anschluss an die Hauswasserversorgung oder durch einen Wassertank zur Verfügung gestellt und über eine Heizeinheit auf die benötigte Temperatur erhitzt. Eine Pumpe fördert das Brühwasser zur Brüheinheit und pumpt es mit dem benötigten Druck und der benötigten Menge durch das Kaffeemehl. Diese Kaffeemaschinen können in der Regel neben Kaffee auch weitere Heißgetränke ausgeben wie Teewasser und heiße Schokolade. Aus Gründen der Effektivität sollten diese Ausgaben der Getränke so weit möglich auch gleichzeitig erfolgen. Das heißt, während eine Tasse Kaffee gebrüht wird, sollte auch die Entnahme von Teewasser und / oder heißer Schokolade möglich sein.

Bei Kaffeemaschinen werden zur Heißwassererzeugung z.B. Boiler, Durchlauferhitzer oder Wärmetauscher verwendet. Zum Fördern und Druck erzeugen kommen beispielsweise Flügelzellenpumpen oder Schwingankerpumpen zur Anwendung.

Zur Mengendosierung stehen gemäß dem bisherigen Stand der Technik die folgenden zwei Möglichkeiten zur Verfügung.

### Variante 1:

Das Heißwasser bzw. Brühwasser wird über Zeit dosiert, wobei davon ausgegangen wird, dass die Pumpe eine gleichbleibende Fördermenge hat. Dies ist die kostengünstigste Lösung. Allerdings führen Schwankungen bei Mehlmenge, Mahlgrad und Verpressung auch zu deutlichen Schwankungen bei der Ausgabemenge in der Tasse.

### Variante 2:

Hier befindet sich im Kaltwasserpfad vor oder nach der Pumpe eine Messeinrichtung zum Bestimmen der Durchflussmenge. Da bei den genannten Heißwassersystemen immer zeitgleich zur entnommenen Heißwassermenge die gleiche Menge an Kaltwasser nachgefüllt wird, entspricht diese der verwendeten Brühwassermenge. Diese Durchflussmengenmesser, auch DFM genannt, sind Volumenzähler, bei denen das Wasser durch eine Messeinrichtung mit einem Flügelrad geleitet wird. Die Umdrehungen der Flügel werden über Magnete und einen Magnetfeldsensor erfasst und somit die Flussmenge pro Zeit ermittelt. Eine Kaffeebrühung wird nun so lange durchgeführt, bis am DFM die hierzu benötigte Menge an Wasser gemessen wurde. Gegenüber der ersten Variante ist die Dosiergenauigkeit durch Verwendung eines DFM's verbessert worden. Ein Bezug von zwei Produkten ist nur bedingt möglich, in dem zur Ausgabe für das zweite Produkt eine Zeitsteuerung benutzt und dabei angenommen wird, das aufgrund der Pumpenförderleistung, der Leitungsquerschnitte und Leitungslängen ein konstanter Fluss stattfindet. Als weitere Lösung können zwei verschiedene Erhitzerstellen und hierzu jeweils vorgelagert ein DFM im Kaltwasserbereich eingesetzt werden. Damit wird hohe Genauigkeit erreicht, jedoch auch ein deutlicher Mehraufwand an Teilen in solche Systeme eingebaut.

Ein Getränkebereiter gemäß dem Stand der Technik mit einem Heißwassererzeuger, einer Pumpe und einem DFM ist beispielsweise der EP 2 489 290 B1 zu entnehmen.

Die US 2016/0095465 A1 ist gerichtet auf ein Pumpsystem und ein Verfahren für eine Getränkezubereitungsvorrichtung. Das Pumpsystem stellt dabei ein Pumpsystem mit einem vorgewärmten Behälter, einer Hauptpumpe zum Pumpen einer vorgewärmten Flüssigkeit aus dem Behälter und Druckmitteln zum Beaufschlagen des Behälters dar. Vorzugsweise stellen die Druckmittel einen Absolutdruck von 0,5 bis 1 bar im Behälter ein. Die Flüssigkeit im Behälter kann auf bis zu 90 °C oder mehr erwärmt werden.

In der US 2016/0257550 A1 wird Heiß- und Kaltgetränkeautomat beschrieben. Eine Vorrichtung und ein Verfahren können konfiguriert werden, um die Auswahl zwischen einer heißen Version und einer kalten Version eines Getränks zu erfassen, das Öffnen eines ersten aus einer Vielzahl von Ventilen und das Schließen eines zweiten aus der Vielzahl von Ventilen zum Bereitstellen von Wasser für eine erste aus einer Vielzahl von Mischkammern basierend auf der Auswahl zu bewirken, die Abgabe von Getränkekonzentrat an die erste Mischkammer zu bewirken, eine Durchflussrate des Wassers und eine Durchflussrate des Getränkekonzentrats in die Mischkammer zu steuern, um das Wasser mit dem Getränkekonzentrat in einem kontrollierten Verhältnis zu mischen, um das Getränk herzustellen, und das Getränk aus der Mischkammer abzugeben.

Druckschrift EP1898063 A1 offenbart einen Getränkebereiter, der zur gleichzeitigen Ausgabe von nur einem Heißgetränk geeignet ist, wobei in einem Kaltwasserpfad und einem Heißwasserpfad jeweils ein Durchflussmengenmesser angeordnet ist.

Der beschriebene Stand der Technik hat jedoch wesentliche Nachteile. So ist ein gleichzeitiger Bezug von zwei Produkten aus einem Erhitzersystem bei Zeitsteuerung nicht möglich. Bei der beschriebenen DFM-Steuerung ist ein gleichzeitiger Bezug von zwei Produkten nur mit großen Dosierschwankungen möglich, da nur die verbrauchte Gesamtmenge an Wasser erfasst wird. Somit ist mit den Vorrichtungen gemäß dem bisherigen Stand der Technik eine gleichzeitige oder zeitlich versetzte Ausgabe bzw. Zubereitung von zwei oder mehr Heißgetränken, wenn überhaupt, nur unter Inkaufnahme großer Dosierschwankungen und damit einer sehr geringen Dosiergenauigkeit möglich.

Ausgehend hiervon war es somit die Aufgabe der vorliegenden Erfindung, einen Getränkebereiter anzugeben, der die gleichzeitige oder zeitversetzte Ausgabe von zwei oder mehr Heißgetränken mit einer hohen Dosiergenauigkeit ermöglicht.

Diese Aufgabe wird bezüglich eines Getränkebereiters mit den Merkmalen des Patentanspruchs 1 und bezüglich eines Verfahrens zur Bestimmung von durch einen Getränkebereiter ausgegebenen und/oder in diesem zur Getränkebereitung verwendeten Heißwassermengen mit den Merkmalen des Patentanspruchs 8 gelöst. In Patentanspruch 14 werden Verwendungsmöglichkeiten des Getränkebereiters angegeben. Die jeweilig abhängigen Patentansprüche stellen dabei vorteilhafte Weiterbildungen dar.

Erfindungsgemäß wird somit ein Getränkebereiter angegeben, der eine Heizeinrichtung zum Erhitzen von Wasser, einen Kaltwasserzulauf, einen ersten Heißwasserabgang, mindestens einen zweiten Heißwasserabgang, einen den Kaltwasserzulauf mit der Heizeinrichtung verbindenden Kaltwasserpfad, einen die Heizeinrichtung mit dem ersten Heißwasserabgang verbindenden ersten Heißwasserpfad, mindestens einen die Heizeinrichtung mit dem mindestens einen zweiten Heißwasserabgang verbindenden zweiten Heißwasserpfad und eine Fördereinrichtung zum Fördern von Wasser umfasst. Erfindungsgemäß umfasst der Getränkebereiter einen ersten Durchflussmengenmesser, welcher im Kaltwasserpfad oder im ersten Heißwasserpfad angeordnet ist, sowie mindestens einen zweiten Durchflussmengenmesser, welcher im mindestens einen zweiten Heißwasserpfad angeordnet ist.

Erfindungsgemäß ist jeder zweite Heißwasserabgang, d.h. jeder der zweiten Heißwasserabgänge, über jeweils einen zweiten Heißwasserpfad, d.h. über jeweils einen der zweiten Heißwasserpfade, mit der Heizeinrichtung verbunden. Dies bedeutet, dass, wenn der erfindungsgemäße Getränkebereiter einen zweiten Heißwasserabgang und einen zweiten Heißwasserpfad umfasst, der zweite Heißwasserabgang über den zweiten Heißwasserpfad mit der Heizeinrichtung verbunden ist, bzw., wenn der erfindungsgemäße Getränkebereiter mehrere zweite Heißwasserabgänge und mehrere zweite Heißwasserpfade umfasst, jeder der zweiten Heißwasserabgänge über jeweils einen der zweiten Heißwasserpfade mit der Heizeinrichtung verbunden ist.

Erfindungsgemäß ist in jedem zweiten Heißwasserpfad, d.h. in jedem der zweiten Heißwasserpfade, jeweils ein zweiter Durchflussmengenmesser, d.h. jeweils einer der zweiten Durchflussmengenmesser, angeordnet. Dies bedeutet, dass, wenn der erfindungsgemäße Getränkebereiter einen zweiten Heißwasserpfad und einen zweiten Durchflussmengenmesser umfasst, der zweite Durchflussmengenmesser in dem zweiten Heißwasserpfad angeordnet ist, bzw., wenn der erfindungsgemäße Getränkebereiter mehrere zweite Heißwasserpfade und mehrere zweite Durchflussmengenmesser umfasst, in jedem der zweiten Heißwasserpfade jeweils einer der zweiten Durchflussmengenmesser angeordnet ist.

Die erfindungsgemäße Vorrichtung umfasst somit einen oder mehrere zweite Heißwasserabgänge, einen oder mehrere zweite Heißwasserpfade sowie einen oder mehrere zweite Durchflussmengenmesser. Beispielsweise kann die Vorrichtung genau einen zweiten Heißwasserabgang, genau einen zweiten Heißwasserpfad und genau einen zweiten Durchflussmengenmesser umfassen. In diesem Fall ist der zweite Heißwasserabgang über den zweiten Heißwasserpfad mit der Heizeinrichtung verbunden, wobei der zweite Durchflussmengenmesser in dem zweiten Heißwasserpfad angeordnet ist. Die Vorrichtung kann aber auch mehrere zweite Heißwasserabgänge, mehrere zweite Heißwasserpfade und mehrere zweite Durchflussmengenmesser enthalten. In diesem Fall ist jeder der zweiten Heißwasserabgänge über jeweils einen der zweiten Heißwasserpfade mit der Heizeinrichtung verbunden, wobei in jedem der zweiten Heißwasserpfade jeweils einer der zweiten Durchflussmengenmesser angeordnet ist. Beispielsweise kann die Vorrichtung zwei zweite Heißwasserabgänge, zwei zweite Heißwasserpfade und zwei zweite Durchflussmengenmesser umfassen. In diesem Fall ist jeder der zwei zweiten Heißwasserabgänge über jeweils eine der zwei zweiten Heißwasserpfade mit der Heizeinrichtung verbunden, wobei in jedem der zwei zweiten Heißwasserpfade jeweils einer der zwei zweiten Durchflussmengenmesser angeordnet ist.

Der erfindungsgemäße Getränkebereiter zeichnet sich insbesondere dadurch aus, dass darin mindestens zwei Durchflussmengenmesser (DFMs) enthalten sind. Dabei befindet sich ein Durchflussmengenmesser, nämlich der erste Durchflussmengenmesser, im Kaltwasserpfad.

Mindestens ein weiterer Durchflussmengenmesser, nämlich der mindestens eine zweite Durchflussmengenmesser, befindet sich im mindestens einen zweiten Heißwasserpfad.

Mit dem im mindestens einen zweiten Heißwasserpfad angeordneten mindestens einen zweiten Durchflussmengenmesser kann die Menge an durch den mindestens einen zweiten Heißwasserpfad fließendem Wasser direkt gemessen werden. Auf diese Weise wird jederzeit die genaue Dosierung einer durch den mindestens einen zweiten Heißwasserabgang abgegebenen oder am mindesten einen zweiten Heißwasserabgang zur Getränkebereitung verwendeten Heißwassermenge ermöglicht.

Somit kann durch die Verwendung eines Durchflussmengenmessers im ersten Heißwasserpfad sowie mindestens einen zweiten Durchflussmengenmessers im mindestens einen zweiten Heißwasserpfad auch bei gleichzeitiger oder zeitversetzter Ausgabe oder Zubereitung von zwei Heißgetränken eine hohe Dosiergenauigkeit bei den ausgegeben bzw. verwendeten Heißwassermengen bzw. den ausgegebenen Getränken erreicht werden.

Da der erste Durchflussmengenmesser nun im Kaltwasserpfad angeordnet ist, kann mit diesem zunächst die Menge an durch den Kaltwasserpfad fließendem Wasser gemessen werden. Wird nun lediglich eine Heißwassermenge über den ersten Heißwasserpfad ausgegeben, ohne dass gleichzeitig oder zeitversetzt eine zweite Heißwassermenge über den mindestens einen zweiten Heißwasserpfad ausgegeben wird, entspricht die Menge an durch den Kaltwasserpfad fließendem Wasser der Menge an durch den ersten Heißwasserpfad fließendem Wasser, sodass die Bestimmung der Menge an durch den ersten Heißwasserpfad fließendem ohne Weiteres mit dem ersten Durchflussmengenmesser bestimmt werden kann und somit genaue Dosierung einer durch den ersten Heißwasserabgang abgegebenen oder am mindesten ersten Heißwasserabgang zur Getränkebereitung verwendeten Heißwassermenge ermöglicht wird. Werden nun stattdessen zwei Heißwassermengen gleichzeitig oder zeitversetzt ausgegeben, d.h. eine erste Heißwassermenge über den ersten Heißwasserpfad und gleichzeitig oder zeitversetzt eine zweite Heißwassermenge über den mindestens einen zweiten Heißwasserpfad, ist auch hier eine genaue Bestimmung der durch den ersten Heißwasserpfad fließenden Wassermenge möglich, indem die durch den mindestens einen zweiten Durchflussmengenmesser bestimmte Menge an durch den mindestens einen zweiten Heißwasserpfad fließendem Wasser von der durch den ersten Durchflussmengenmesser gemessenen Menge an durch den Kaltwasserpfad fließendem Wasser abgezogen wird. Hierbei wird sich die Tatsache zu Nutze gemacht, dass die Menge an durch den Kaltwasserpfad fließendem Wasser letztlich der Summe der Mengen an durch die Heißwasserpfade fließendem Wasser entspricht. Mit anderen Worten kann, da der erste Durchflussmengenmesser im Kaltwasserpfad die Gesamtmenge des ausgegebenen Wassers erfasst, durch Differenzbildung der Messergebnisse vom ersten und vom mindestens zweiten Durchflussmengenmesser auch die Ausgabemenge am ersten Heißwasserabgang erfasst und somit auch entsprechend dosiert werden.

Auf diese Weise wird eine hohe Dosiergenauigkeit bei den ausgegeben bzw. verwendeten Heißwassermengen bzw. den ausgegebenen Getränken ermöglicht, unabhängig davon, ob und wie viele Heißwassermengen gleichzeitig oder zeitversetzt durch die Heißwasserabgänge ausgegeben werden oder an diesem zur Getränkebereitung verwendet werden.

Durch die erfindungsgemäße Verwendung von mindestens zwei Durchflussmengenmessern wird somit die gleichzeitige oder zeitversetzte Ausgabe von zwei oder mehr Heißgetränken durch einen Getränkebereiter mit einer hohen Dosiergenauigkeit ermöglicht. Aufgrund der Verwendung von mindestens zwei Durchflussmengenmessern können die Ausgabemengen entweder direkt gemessen oder durch einfache Differenzbildung (sowie gegebenenfalls zusätzlicher Summenbildung) von mit den Durchflussmengenmessern direkt gemessenen Wassermengen ermittelt werden. Auf diese Weise können die Ausgabenmengen des Getränkebereiters auch bei gleichzeitiger Ausgabe mehrerer Getränke sehr genau bestimmt werden. Somit kann letztlich eine Verbesserung der Dosiergenauigkeit der vom Getränkebereiter ausgebebenen Getränke erreicht wird.

Hieraus ergibt sich der Vorteil, dass jederzeit die richtigen Getränkemengen ausgegeben werden können und dass jederzeit die richtigen Heißwassermengen zur Getränkebereitung verwendet werden können, was dazu führt, dass die Getränke jederzeit richtig zubereitet und ausgegeben werden können, auch, wenn gleichzeitig mehrere Getränke zubereitet bzw. ausgegeben werden.

Weiterhin besteht auch die Möglichkeit, wenn kein Produkt bezogen wird, eine Undichtigkeitsüberwachung zu realisieren und bei Erkennung einer Undichtigkeit diese Leckage einem bestimmten Wasserpfad zuzuordnen. Mit dem erfindungsgemäßen Getränkebereiter ist es somit auch möglich eine undichte Stelle zu erkennen und zu orten, d.h. den Wasserpfad zu ermitteln, wo diese vorliegt.

Eine bevorzugte Ausführungsform des erfindungsgemäßen Getränkebereiters ist dadurch gekennzeichnet, dass mindestens einer der in einem Heißwasserpfad angeordneten Durchflussmengenmesser, bevorzugt jeder in einem Heißwasserpfad angeordnete Durchflussmengenmesser, ein berührungsloser Durchflussmengenmesser, vorzugsweise ein Ultraschall-Durchflussmengenmesser oder ein magnetisch-induktiver Durchflussmengenmesser, ist. Sowohl bei dem ersten Durchflussmengenmesser als auch beim dem mindestens einen zweiten Durchflussmengenmesser kann es sich um einen berührungsloser Durchflussmengenmesser, vorzugsweise um einen Ultraschall-Durchflussmengenmesser oder um einen magnetisch-induktiver Durchflussmengenmesser, handeln.

Beim Erhitzen des Wassers in der Heizeinrichtung kann sich im Laufe der Betriebszeit Kalk bilden, welcher sich durch Aufheizen und Abkühlen lösen kann. Die hierbei entstehenden Kalkteilchen und Kalksplitter werden in die Heißwasserpfade gespült und können dort das drehende Flügelrad eines sich dort befindenden Durchflussmengenmessers blockieren, was zu einem kompletten Ausfall des Getränkebereiters führen kann. Durch Verwendung eines berührungslosen Durchflussmengenmessers kann ein solches Blockieren vermieden werden, da dieser kein drehendes Flügelrad oder ein entsprechendes bewegliches Element, was blockieren könnte, aufweist. Infolge dessen haben Kalk und Kalksplitter keinen oder zumindest nur noch einen geringen Einfluss auf die Volumenstromerfassung durch die Durchflussmengenmesser. Zudem können mögliche Ausfälle des Getränkebereiters verhindert werden.

Natürlich ist es auch möglich, dass ein im Kaltwasserpfad angeordneter Durchflussmengenmesser ein berührungsloser Durchflussmengenmesser, vorzugsweise ein Ultraschall-Durchflussmengenmesser oder ein magnetisch-induktiver Durchflussmengenmesser, ist.

Bei der Fördereinrichtung zum Fördern von Wasser kann es sich um eine Pumpe handeln.

In einer weiteren bevorzugten Ausführungsform ist die Fördereinrichtung zum Fördern von Wasser im Kaltwasserpfad angeordnet.

Vorzugsweise ist der erste Durchflussmengenmesser im Kaltwasserpfad stromaufwärts der Fördereinrichtung zum Fördern von Wasser oder stromabwärts der Fördereinrichtung zum Fördern von Wasser angeordnet.

Eine weitere bevorzugte Ausführungsform zeichnet sich dadurch aus, dass der Getränkebereiter am ersten Heißwasserabgang und/oder am mindestens einen zweiten Heißwasserabgang jeweils eine Brüheinheit zum Brühen von Kaffee oder eine Mixeinheit zum Mischen von Wasser mit einem Feststoff, vorzugsweise Kakaopulver oder Suppenpulver, aufweist. Befindet sich an einem Heißwasserabgang eine Brüheinheit zum Brühen von Kaffee, kann das durch diesen Heißwasserabgang fließende Wasser in der Brüheinheit zusammen mit Kaffeepulver zur Zubereitung von Kaffee verwendet werden, welcher anschließend vom Getränkebereiter ausgegeben werden kann. Befindet sich an einem Heißwasserabgang eine Mixeinheit zum Mischen von Wasser mit einem Feststoff, z.B. Kakaopulver oder Suppenpulver, kann das durch diesen Heißwasserabgang fließende Wasser in der Mixeinheit zusammen mit Kaffeepulver zur Zubereitung eines Mixgetränks, z.B. eines Kakaos oder einer Trinksuppe, verwendet werden, welches anschließend vom Getränkebereiter ausgegeben werden kann.

Bei der eben beschriebenen bevorzugten Ausführungsform sind diverse Kombinationen möglich. So kann der Getränkebereiter beispielsweise an einem Heißwasserabgang eine Brüheinheit zum Brühen von Kaffee aufweisen und an einem anderen Heißwasserabgang eine Mixeinheit zum Mischen von Wasser mit einem Feststoff, z.B. Kakaopulver oder Suppenpulver, aufweisen. Der Getränkebereiter kann aber auch an zwei Heißwasserabgängen jeweils eine Brüheinheit zum Brühen von Kaffee aufweisen. Oder der Getränkebereiter kann an einem Heißwasserabgang eine Brüheinheit zum Brühen von Kaffee aufweisen und an zwei weiteren Heißwasserabgängen jeweils eine Mixeinheit zum Mischen von Wasser mit einem Feststoff aufweisen. Prinzipiell sind also diverse Kombinationen und Möglichkeiten denkbar die im erfindungsgemäßen Getränkebereiter verwendet werden können.

Befindet sich an einem Heißwasserabgang weder eine Brüheinheit noch eine Mixeinheit, kann das durch diesen Heißwasserabgang fließende Heißwasser direkt vom Getränkebereiter abgegeben werden. Dieses Heißwasser kann dann z.B. zur Zubereitung von Tee außerhalb des Getränkebereiters verwendet werden. Beispielsweise kann der Getränkebereiter am ersten Heißwasserabgang weder eine Brüheinheit noch eine Mixeinheit aufweisen.

Es ist es besonders bevorzugt, dass der Getränkebereiter an einem der zweiten Heißwasserabgänge eine Brüheinheit zum Brühen von Kaffee aufweist, an einem weiteren der zweiten Heißwasserabgänge eine Mixeinheit zum Mischen von Wasser mit einem Feststoff, z.B. Kakaopulver oder Suppenpulver, aufweist und am ersten Heißwasserabgang weder eine Brüheinheit noch eine Mixeinheit aufweist.

Eine weitere Ausführungsform des erfindungsgemäßen Getränkebereiters ist dadurch gekennzeichnet, dass der Getränkebereiter
- einen, d.h. genau einen, zweiten Heißwasserabgang, einen, d.h. genau einen, zweiten Heißwasserpfad und einen, d.h. genau einen, zweiten Durchflussmengenmesser, oder
- mehrere, bevorzugt zwei oder drei, zweite Heißwasserabgänge, mehrere, bevorzugt zwei oder drei, zweite Heißwasserpfade und mehrere, bevorzugt zwei oder drei, zweite Durchflussmengenmesser,
umfasst.

Vorzugsweise umfasst der erfindungsgemäße Durchflussmengenmesser jeweils die gleiche Anzahl an zweiten Heißwasserabgängen, zweiten Heißwasserpfaden und zweiten Durchflussmengenmessern. Dies bedeutet, dass die Anzahl an vom Getränkebereiter umfassten zweiten Heißwasserabgängen sowohl der Anzahl an vom Getränkebereiter umfassten zweiten Heißwasserpfaden als auch der Anzahl an vom Getränkebereiter umfassten zweiten Durchflussmengenmessern entspricht.

Umfasst der Getränkebereiter genau einen zweiten Heißwasserabgang, genau einen zweiten Heißwasserpfad und genau einen zweiten Durchflussmengenmesser, dann ist der zweite Heißwasserabgang über den zweiten Heißwasserpfad mit der Heizeinrichtung verbunden, wobei der zweite Durchflussmengenmesser in dem zweiten Heißwasserpfad angeordnet ist. In diesem Fall kann die Menge an durch den zweiten Heißwasserpfad fließendem Wasser direkt durch den im zweiten Heißwasserpfad angeordneten Durchflussmengenmesser gemessen werden. Da der erste Durchflussmengenmesser nun im Kaltwasserpfad angeordnet ist, kann die Menge an durch den ersten Heißwasserpfad fließendem Wasser dadurch bestimmt werden, dass die Differenz aus der mit dem ersten Durchflussmengenmesser gemessenen Menge an durch den Kaltwasserpfad fließendem Wasser und der mit dem zweiten Durchflussmengenmesser gemessenen Menge an durch den zweiten Heißwasserpfad fließendem Wasser gebildet wird. Somit kann durch die Verwendung von zwei Durchflussmengenmessern auch bei gleichzeitiger oder zeitversetzter Ausgabe oder Zubereitung von zwei Heißgetränken eine hohe Dosiergenauigkeit bei den ausgegeben bzw. verwendeten Heißwassermengen bzw. den ausgegebenen Getränken erreicht werden.

Umfasst die Vorrichtung mehrere zweite Heißwasserabgänge, mehrere zweite Heißwasserpfade und mehrere zweite Durchflussmengenmesser, dann ist jeder der zweiten Heißwasserabgänge über jeweils einen der zweiten Heißwasserpfade mit der Heizeinrichtung verbunden, wobei in jedem der zweiten Heißwasserpfade jeweils einer der zweiten Durchflussmengenmesser angeordnet ist. In diesem Fall kann die jeweilige Menge an durch die zweiten Heißwasserpfade fließendem Wasser direkt durch die in den zweiten Heißwasserpfaden angeordneten Durchflussmengenmesser gemessen werden. Mit anderen Worten enthält jeder der zweiten Heißwasserpfade jeweils einen Durchflussmengenmesser, mit welchem die Menge an durch den jeweiligen Heißwasserpfad fließendem Wasser gemessen werden kann. Da der erste Durchflussmengenmesser nun im Kaltwasserpfad angeordnet ist, kann die Menge an durch den ersten Heißwasserpfad fließendem Wasser dadurch bestimmt werden, dass die Differenz aus der mit dem ersten Durchflussmengenmesser gemessenen Menge an durch den Kaltwasserpfad fließendem Wasser und der Summe der mit den zweiten Durchflussmengenmessern gemessenen Mengen an durch die zweiten Heißwasserpfade fließendem Wasser gebildet wird. Mit anderen Worten werden zunächst mit den mehreren zweiten Durchflussmengenmessern die einzelnen Mengen an durch die mehreren Heißwasserpfade fließendem Wasser gemessen. Diese Mengen werden zu einer Summe aufsummiert. Diese Summe wird anschließend von der durch den im Kaltwasserpfad angeordneten Durchflussmengenmesser gemessenen Menge an durch den Kaltwasserpfad fließendem Wasser abgezogen. Das Ergebnis entspricht der Menge an durch den ersten Heißwasserpfad fließendem Wasser. Somit kann durch die Verwendung von mehr als zwei Durchflussmengenmessern auch bei gleichzeitiger oder zeitversetzter Ausgabe oder Zubereitung von mehr als zwei Heißgetränken eine hohe Dosiergenauigkeit bei den ausgegeben bzw. verwendeten Heißwassermengen bzw. den ausgegebenen Getränken ermöglicht erreicht werden.

Beispielsweise kann die Vorrichtung drei zweite Heißwasserabgänge, drei zweite Heißwasserpfade und drei zweite Durchflussmengenmesser umfassen. In diesem Fall ist jeder der drei Heißwasserabgänge über jeweils einen der drei Heißwasserpfade mit der Heizeinrichtung verbunden, wobei in jedem der drei Heißwasserpfade jeweils einer der drei Durchflussmengenmesser angeordnet ist.

Eine weitere bevorzugte Ausführungsform ist dadurch gekennzeichnet, dass der Getränkebereiter ein Getränkeautomat zur Ausgabe mehrerer Heiß- und/oder Kaltgetränke, umfassend eine oder mehrere Kaffeespezialitäten, eine oder mehrere Teespezialitäten und/oder eine oder mehrere Trinksuppenspezialitäten, ist.

Die vorliegende Erfindung betrifft auch ein Verfahren zur Bestimmung von durch einen Getränkebereiter ausgegebenen und/oder in diesem zur Getränkebereitung verwendeten Heißwassermengen, wobei der Getränkebereiter ein erfindungsgemäßer Getränkebereiter ist und wobei mindestens eine durch einen der Heißwasserabgänge abgegebene und/oder an einem der Heißwasserabgänge zur Getränkebereitung verwendete Heißwassermenge bestimmt wird.

Eine bevorzugte Variante des erfindungsgemäßen Verfahrens zeichnet sich dadurch aus, dass zwei zumindest teilweise gleichzeitig durch jeweils einen der Heißwasserabgänge abgegebene und/oder an jeweils einem der Heißwasserabgänge zur Getränkebereitung verwendete Heißwassermengen bestimmt werden.

In einer weiteren bevorzugten Variante des erfindungsgemäßen Verfahrens wird eine durch den mindestens einen zweiten Heißwasserabgang abgegebene oder am mindestens einen zweiten Heißwasserabgang zur Getränkebereitung verwendete Heißwassermenge dadurch bestimmt, dass mit dem mindestens einen zweiten Durchflussmengenmesser die Menge an durch den mindestens einen zweiten Heißwasserpfad fließendem Wasser gemessen wird.

Eine weitere bevorzugte Variante des erfindungsgemäßen Verfahrens ist dadurch gekennzeichnet, dass der erste Durchflussmengenmesser im Kaltwasserpfad angeordnet ist und eine durch den ersten Heißwasserabgang abgegebene oder am ersten Heißwasserabgang zur Getränkebereitung verwendete Heißwassermenge dadurch bestimmt wird, dass mit dem ersten Durchflussmengenmesser die Menge an durch den Kaltwasserpfad fließendem Wasser gemessen wird, mit dem mindestens einen zweiten Durchflussmengenmesser die Menge an durch den mindesten einen zweiten Heißwasserpfad fließendem Wasser bestimmt wird, und durch Bilden der Differenz aus der mit dem ersten Durchflussmengenmesser gemessenen Menge an durch den Kaltwasserpfad fließendem Wasser und der mit dem mindestens einen zweiten Durchflussmengenmesser bestimmten Menge an durch den mindestens einen zweiten Heißwasserpfad fließendem Wasser die Menge an durch den ersten Heißwasserpfad fließendem Wasser ermittelt wird.

Bei dieser bevorzugten Variante ist es möglich dass der Getränkebereiter einen, d.h. genau einen, zweiten Heißwasserabgang, einen, d.h. genau einen, zweiten Heißwasserpfad und einen, d.h. genau einen, zweiten Durchflussmengenmesser umfasst, wobei eine durch den ersten Heißwasserabgang abgegebene oder am ersten Heißwasserabgang zur Getränkebereitung verwendete Heißwassermenge dadurch bestimmt wird, dass mit dem ersten Durchflussmengenmesser die Menge an durch den Kaltwasserpfad fließendem Wasser gemessen wird, mit dem zweiten Durchflussmengenmesser die Menge an durch den zweiten Heißwasserpfad fließendem Wasser bestimmt wird, und durch Bilden der Differenz aus der mit dem ersten Durchflussmengenmesser gemessenen Menge an durch den Kaltwasserpfad fließendem Wasser und der mit dem zweiten Durchflussmengenmesser bestimmten Menge an durch den zweiten Heißwasserpfad fließendem Wasser die Menge an durch den ersten Heißwasserpfad fließendem Wasser ermittelt wird.

Es ist jedoch auch möglich, dass der Getränkebereiter mehrere zweite Heißwasserabgänge, mehrere zweite Heißwasserpfade und mehrere zweite Durchflussmengenmesser umfasst, wobei eine durch den ersten Heißwasserabgang abgegebene oder am ersten Heißwasserabgang zur Getränkebereitung verwendete Heißwassermenge dadurch bestimmt wird, dass mit dem ersten Durchflussmengenmesser die Menge an durch den Kaltwasserpfad fließendem Wasser gemessen wird, mit den zweiten Durchflussmengenmessern die Mengen an durch die zweiten Heißwasserpfade fließendem Wasser gemessen werden, und durch Bilden der Differenz aus der mit dem ersten Durchflussmengenmesser gemessenen Menge an durch den Kaltwasserpfad fließendem Wasser und der Summe der mit den zweiten Durchflussmengenmessern gemessenen Mengen an durch die zweiten Heißwasserpfade fließendem Wasser die Menge an durch den ersten Heißwasserpfad fließendem Wasser ermittelt wird.

Eine weitere bevorzugte Variante des erfindungsgemäßen Verfahrens ist dadurch gekennzeichnet, dass, wenn nur eine Heißwassermenge durch den Getränkebereiter ausgegeben und/oder in diesem zur Getränkebereitung verwendet wird, welche dabei durch einen zweiten Heißwasserpfad fließt, mindestens einer der Durchflussmengenmesser kalibriert wird, wobei hierbei mit dem ersten Durchflussmengenmesser, welcher im Kaltwasserpfad angeordnet ist, ein Messwert für die Menge an durch den Kaltwasserpfad fließendem Wasser gemessen wird, mit dem in dem zweiten Heißwasserpfad, durch welchen die Heißwassermenge fließt, angeordneten Durchflussmengenmesser ein Messwert für die Menge an durch diesen zweiten Heißwasserpfad fließendem Wasser gemessen wird, und anschließend die beiden Messwerte miteinander verglichen werden.

Diese bevorzugte Verfahrensvariante nutzt die serielle Schaltung des im Kaltwasserpfad angeordneten Durchflussmengenmessers und eines in einem Heißwasserpfad angeordneten Durchflussmengenmessers aus, um so eine Kalibrierung von einem der Durchflussmengenmesser zu erreichen. Für den Fall, dass vom Getränkebereiter nur ein einzelnes Getränk bezogen wird, d.h. nur ein einzelnes Getränk vom Getränkebereiter ausgegeben oder zubereitet wird, und dieses Getränk durch den zweiten Heißwasserpfad bzw. einen der zweiten Heißwasserpfade fließt, fließt die gleiche Wassermenge zunächst durch den Kaltwasserpfad und nach dem Erhitzen des Wassers in der Heizeinrichtung anschließend durch den Heißwasserpfad. Der vom im Kaltwasserpfad angeordneten Durchflussmengenmesser ermittelte Messwert sollte somit zumindest im Wesentlichen dem vom im Heißwasserpfad angeordneten Durchflussmengenmesser ermittelten Messwert entsprechen. Durch einen Vergleich beider Messwerte kann daher einer der beiden Durchflussmengenmesser mit dem anderen abgeglichen bzw. kalibriert werden.

Weiterhin besteht auch die Möglichkeit, wenn kein Produkt bezogen wird, eine Undichtigkeitsüberwachung zu realisieren und bei Erkennung einer Undichtigkeit diese Leckage einem bestimmten Wasserpfad zuzuordnen.

Die vorliegende Erfindung betrifft auch die Verwendung eines erfindungsgemäßen Getränkebereiters zum Dosieren und/oder Ausgeben von Getränken, bevorzugt Heißgetränken, wobei vorzugsweise zwei oder mehr Getränke gleichzeitig oder zeitversetzt dosiert und/oder ausgegeben werden.

Anhand der nachfolgenden Figuren und Beispiele soll die vorliegende Erfindung näher erläutert werden, ohne diese auf die hier gezeigten spezifischen Ausführungsformen und Parameter zu beschränken.

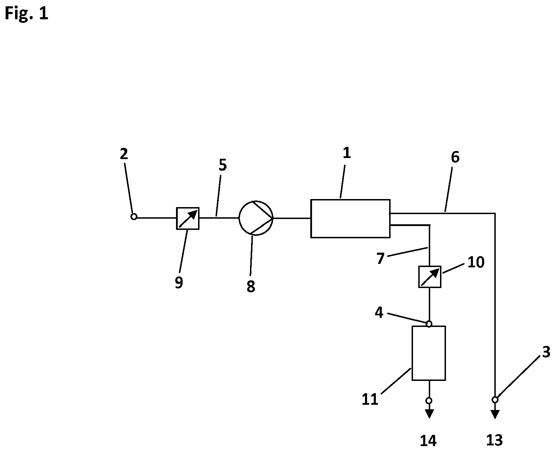

In Fig. 1 ist eine schematische Darstellung des Wasserverlaufs einer beispielhaften Ausführungsform des erfindungsgemäßen Getränkebereiters gezeigt. Der Getränkebereiter umfasst hier eine Heizeinrichtung 1 zum Erhitzen von Wasser, einen Kaltwasserzulauf 2, einen ersten Heißwasserabgang 3, einen zweiten Heißwasserabgang 4, einen den Kaltwasserzulauf 2 mit der Heizeinrichtung 1 verbindenden Kaltwasserpfad 5, einen die Heizeinrichtung 1 mit dem ersten Heißwasserabgang 3 verbindenden ersten Heißwasserpfad 6, einen die Heizeinrichtung 1 mit dem zweiten Heißwasserabgang 4 verbindenden zweiten Heißwasserpfad 7, eine Fördereinrichtung 8 zum Fördern von Wasser, einen ersten Durchflussmengenmesser 9, welcher im Kaltwasserpfad 5 angeordnet ist, und einen zweiten Durchflussmengenmesser 10, welcher im zweiten Heißwasserpfad 7 angeordnet ist.

Bei der Fördereinrichtung 8 zum Fördern von Wasser handelt es sich um eine Pumpe. Beim zweiten Durchflussmengenmesser 10 handelt es sich um einen berührungslosen Durchflussmengenmesser, z.B. einen Ultraschall-Durchflussmengenmesser oder einen magnetisch-induktiven Durchflussmengenmesser. Die Fördereinrichtung 8 zum Fördern von Wasser ist im Kaltwasserpfad 5 angeordnet, wobei der erste Durchflussmengenmesser 9 im Kaltwasserpfad stromaufwärts der Fördereinrichtung 8 zum Fördern von Wasser angeordnet ist. Zudem weist der Getränkebereiter am zweiten Heißwasserabgang 4 eine Brüheinheit 11 zum Brühen von Kaffee auf.

Durch den Getränkebereiter, dessen Wasserverlauf schematisch in Fig. 1 dargestellt ist, kann somit Heißwasser 13 und Kaffee 14 bezogen werden. Das Heißwasser 13 wird über den ersten Heißwasserabgang 3 abgegeben. Der Kaffee 14 wird in der Brüheinheit 11 zubereitet und anschließend über einen Abgang abgegeben.

Mit dem im zweiten Heißwasserpfad 7 angeordneten zweiten Durchflussmengenmesser 10 kann die Menge an durch den zweiten Heißwasserpfad 7 fließendem Wasser gemessen werden. Auf diese Weise wird die genaue Dosierung einer am zweiten Heißwasserabgang 4 zur Kaffeezubereitung in der Brüheinheit 11 verwendete Heißwassermenge ermöglicht, wodurch letztlich auch die Menge des ausgegebenen Kaffees genau dosiert werden kann.

Wird nun lediglich eine Heißwassermenge über den ersten Heißwasserpfad 6 geleitet und am ersten Heißwasserabgang 3 ausgegeben, z.B. für die Zubereitung von Tee außerhalb des Getränkebereiters, ohne dass gleichzeitig oder zeitversetzt eine zweite Heißwassermenge über den zweiten Heißwasserpfad 7 fließt, entspricht die Menge an durch den Kaltwasserpfad 5 fließendem Wasser der Menge an durch den ersten Heißwasserpfad 6 fließendem Wasser, sodass eine genaue Dosierung mit Hilfe des ersten Durchflussmengenmessers 9 möglich ist, indem mit diesem die Menge an durch den Kaltwasserpfad 5 fließendem Wasser gemessen wird, welche dann der Menge an durch den ersten Heißwasserpfad 6 fließendem Wasser entspricht. Somit kann die Menge des ausgegebenen Heißwassers genau dosiert werden.

Werden nun zwei Heißwassermengen gleichzeitig oder zeitversetzt ausgegeben, d.h. eine erste Heißwassermenge fließt über den ersten Heißwasserpfad 6 und gleichzeitig oder zeitversetzt fließt eine zweite Heißwassermenge über den zweiten Heißwasserpfad 7, ist auch hier eine genaue Bestimmung der durch den ersten Heißwasserpfad 6 fließenden Wassermenge möglich, indem die durch den zweiten Durchflussmengenmesser 10 bestimmte Menge an durch den zweiten Heißwasserpfad 7 fließendem Wasser von der durch den ersten Durchflussmengenmesser 9 gemessenen Menge an durch den Kaltwasserpfad 5 fließendem Wasser abgezogen wird. Hierbei wird sich die Tatsache zu Nutze gemacht, dass die Menge an durch den Kaltwasserpfad 5 fließendem Wasser letztlich der Summe der Mengen an durch die Heißwasserpfade 6 und 7 fließendem Wasser entspricht.

Auf diese Weise wird eine hohe Dosiergenauigkeit der ausgegebenen bzw. zur Getränkebereitung verwendeten Heißwassermengen bzw. der ausgegebenen Getränkemengen ermöglicht, auch wenn zwei Heißwassermengen gleichzeitig oder zeitversetzt ausgegeben bzw. zur Getränkebereitung verwendet werden.

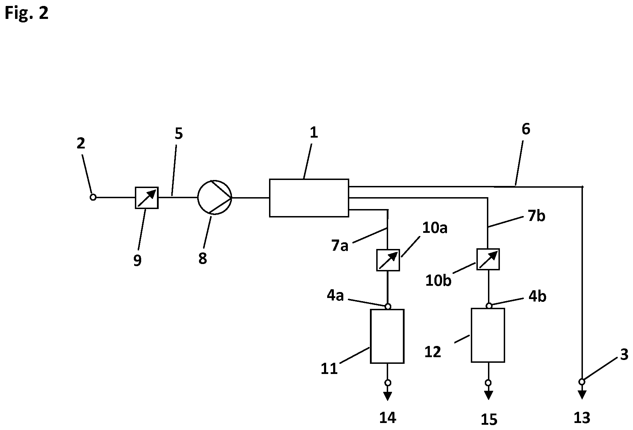

In Fig. 2 ist eine schematische Darstellung des Wasserverlaufs einer weiteren beispielhaften Ausführungsform des erfindungsgemäßen Getränkebereiters gezeigt. Der hier dargestellte Aufbau unterscheidet sich vom im Fig. 1 gezeigten Aufbau im Wesentlichen darin, dass der Getränkebereiter zwei zweite Heißwasserabgänge 4a und 4b, zwei zweite Heißwasserpfade 7a und 7b und zwei zweite Durchflussmengenmesser 10a und 10b umfasst. Wie Fig. 2 entnommen werden kann, ist jeder der zweiten Heißwasserabgänge 4a und 4b über jeweils einen der zweiten Heißwasserpfade 7a und 7b mit der Heizeinrichtung 1 verbunden. So ist der der zweite Heißwasserabgang 4a über den zweiten Heißwasserabgang 7a mit der Heizeinrichtung 1 verbunden, während der zweite Heißwasserabgang 4b über den zweiten Heißwasserabgang 7b mit der Heizeinrichtung verbunden ist. Zudem kann Fig. 2 auch entnommen werden, dass in jedem der zweiten Heißwasserpfade 7a und 7b jeweils einer der zweiten Durchflussmengenmesser 10a und 10b angeordnet ist. So ist der zweite Durchflussmengenmesser 10a im zweiten Heißwasserpfad 7a angeordnet, während der zweite Durchflussmengenmesser 10b im zweiten Heißwasserpfad 7b angeordnet ist. Der Getränkebereiter weist am zweiten Heißwasserabgang 4a eine Brüheinheit 11 zum Brühen von Kaffee auf, wohingegen er am zweiten Heißwasserabgang 4b eine Mixeinheit 12 zum Mischen von Wasser mit Kakaopulver aufweist.

Ansonsten ist der in Fig. 2 gezeigte Aufbau zum in Fig. 1 gezeigten Aufbau identisch.

Durch den Getränkebereiter, dessen Wasserverlauf schematisch in Fig. 2 dargestellt ist, kann somit Heißwasser 13, Kaffee 14 und Kakao 15 bezogen werden. Das Heißwasser 13 wird über den ersten Heißwasserabgang 3 abgegeben. Der Kaffee 14 wird in der Brüheinheit 11 zubereitet und anschließend über einen Abgang abgegeben. Der Kakao wird in der Mixeinheit 12 zubereitet und anschließend über einen weiteren Abgang abgegeben.

Die jeweilige Menge an durch die zweiten Heißwasserpfade 7a und 7b fließendem Wasser kann direkt durch die in den zweiten Heißwasserpfaden 7a und 7b angeordneten Durchflussmengenmesser 10a und 10b gemessen werden. Mit anderen Worten enthält jeder der zweiten Heißwasserpfade 7a und 7b jeweils einen Durchflussmengenmesser 10a bzw. 10b, mit welchem die Menge an durch den jeweiligen Heißwasserpfad 7a bzw. 7b fließendem Wasser gemessen werden kann. Auf diese Weise wird sowohl die genaue Dosierung einer am zweiten Heißwasserabgang 4a zur Kaffeezubereitung in der Brüheinheit 11 verwendete Heißwassermenge als auch die genaue Dosierung einer am zweiten Heißwasserabgang 4b zur Kakaozubereitung in der Mixeinheit 12 verwendete Heißwassermenge ermöglicht.

Die Menge an durch den ersten Heißwasserpfad 6 fließendem Wasser kann dadurch bestimmt werden, dass die Differenz aus der mit dem ersten Durchflussmengenmesser 9 gemessenen Menge an durch den Kaltwasserpfad 5 fließendem Wasser und der Summe der mit den zweiten Durchflussmengenmessern 10a und 10b gemessenen Mengen an durch die zweiten Heißwasserpfade 7a und 7b fließendem Wasser gebildet wird. Mit anderen Worten werden zunächst mit den zwei zweiten Durchflussmengenmessern 10a und 10b die einzelnen Mengen an durch die zwei zweiten Heißwasserpfade 7a und 7b fließendem Wasser gemessen. Diese Mengen werden dann zu einer Summe aufsummiert. Diese Summe wird anschließend von der durch den im Kaltwasserpfad 5 angeordneten Durchflussmengenmesser 9 gemessenen Menge an durch den Kaltwasserpfad 5 fließendem Wasser abgezogen. Das Ergebnis entspricht der Menge an durch den ersten Heißwasserpfad 6 fließendem Wasser.

Somit kann durch die Verwendung von drei Durchflussmengenmessern auch bei gleichzeitiger oder zeitversetzter Ausgabe oder Zubereitung von zwei oder drei Heißwassermengen bzw. Heißgetränken, wie hier z.B. heißes Wasser, Kaffee und Kakao, eine hohe Dosiergenauigkeit bei allen abgegebenen bzw. zur Getränkebereitung verwendeten Heißwassermengen bzw. ausgegebenen Getränken erreicht werden.

Das Prinzip der in Fig. 2 gezeigten Ausführungsform kann im Sinne der vorliegenden Erfindung auch ohne Weiteres dahingehend abgeändert werden, dass der Getränkebereiter mehr als zwei zweite Heißwasserabgänge, also beispielsweise drei, vier, fünf oder auch noch mehr zweiten Heißwasserabgänge, umfasst. Auch in diesen Fällen kann nach dem gleichen Prinzip bei gleichzeitiger oder zeitversetzter Ausgabe oder Zubereitung von zwei, drei oder mehr Heißwassermengen bzw. Heißgetränken, eine hohe Dosiergenauigkeit bei allen abgegebenen bzw. zur Getränkebereitung verwendeten Heißwassermengen bzw. ausgegebenen Getränken erreicht werden.

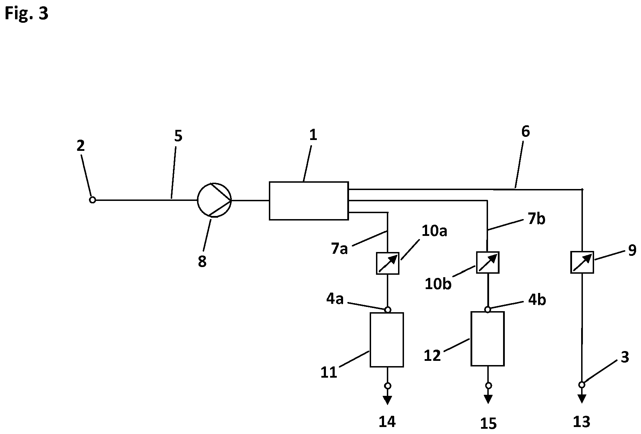

In Fig. 3 ist eine schematische Darstellung des Wasserverlaufs einer beispielhaften Ausführungsform eines nicht erfindungsgemäßen Getränkebereiters gezeigt. Der hier dargestellte Aufbau unterscheidet sich vom im Fig. 2 gezeigten Aufbau lediglich darin, dass der erste Durchflussmengenmesser 9 nicht im Kaltwasserpfad 5, sondern stattdessen im ersten Heißwasserpfad 6 angeordnet ist. Ansonsten ist der in Fig. 3 gezeigte Aufbau zum in Fig. 2 gezeigten Aufbau identisch.

Die jeweilige Menge an durch die zweiten Heißwasserpfade 7a und 7b fließendem Wasser kann, genau wie bei der in Fig. 2 gezeigten Ausführungsform, direkt durch die in den zweiten Heißwasserpfaden 7a und 7b angeordneten Durchflussmengenmesser 10a und 10b gemessen werden.

Nach dem gleichen Prinzip kann die Menge an durch den ersten Heißwasserpfad 6 fließendem Wasser direkt durch den im ersten Heißwasserpfad 6 angeordneten Durchflussmengenmesser 9 gemessen werden.

Auch hier kann durch die Verwendung von drei Durchflussmengenmessern auch bei gleichzeitiger oder zeitversetzter Ausgabe oder Zubereitung von zwei oder drei Heißwassermengen bzw. Heißgetränken, wie hier z.B. heißes Wasser, Kaffee und Kakao, eine hohe Dosiergenauigkeit bei allen abgegebenen bzw. zur Getränkebereitung verwendeten Heißwassermengen bzw. ausgegebenen Getränken erreicht werden.

## Patentansprüche

1. Getränkebereiter zur gleichzeitigen Ausgabe von zwei oder mehr Heißgetränken umfassend eine Heizeinrichtung (1) zum Erhitzen von Wasser, einen Kaltwasserzulauf (2), einen ersten Heißwasserabgang (3), mindestens einen zweiten Heißwasserabgang (4, 4a, 4b), einen den Kaltwasserzulauf (2) mit der Heizeinrichtung (1) verbindenden Kaltwasserpfad (5), einen die Heizeinrichtung (1) mit dem ersten Heißwasserabgang (3) verbindenden ersten Heißwasserpfad (6), mindestens einen die Heizeinrichtung (1) mit dem mindestens einen zweiten Heißwasserabgang (4, 4a, 4b) verbindenden zweiten Heißwasserpfad (7, 7a, 7b), wobei jeder zweite Heißwasserabgang (4, 4a, 4b) über jeweils einen zweiten Heißwasserpfad (7, 7a, 7b) mit der Heizeinrichtung (1) verbunden ist, eine Fördereinrichtung (8) zum Fördern von Wasser, einen ersten Durchflussmengenmesser (9), und mindestens einen zweiten Durchflussmengenmesser (10, 10a, 10b), welcher im mindestens einen zweiten Heißwasserpfad (7, 7a, 7b) angeordnet ist, wobei in jedem zweiten Heißwasserpfad (7, 7a, 7b) jeweils ein zweiter Durchflussmengenmesser (10, 10a, 10b) angeordnet ist,
**dadurch gekennzeichnet, dass** der erste Durchflussmengenmesser (9) im Kaltwasserpfad (5) angeordnet ist.

2. Getränkebereiter nach dem vorhergehenden Anspruch, **dadurch gekennzeichnet, dass** mindestens einer der in einem Heißwasserpfad (6, 7, 7a, 7b) angeordneten Durchflussmengenmesser (10, 10a, 10b), bevorzugt jeder in einem Heißwasserpfad (6, 7, 7a, 7b) angeordnete Durchflussmengenmesser (10, 10a, 10b), ein berührungsloser Durchflussmengenmesser, vorzugsweise ein Ultraschall-Durchflussmengenmesser oder ein magnetisch-induktiver Durchflussmengenmesser, ist.

3. Getränkebereiter nach einem der vorhergehenden Ansprüche, **dadurch gekennzeichnet, dass** die Fördereinrichtung (8) zum Fördern von Wasser im Kaltwasserpfad (5) angeordnet ist.

4. Getränkebereiter nach dem vorhergehenden Anspruch, **dadurch gekennzeichnet, dass** der erste Durchflussmengenmesser (9) im Kaltwasserpfad (5) stromaufwärts der Fördereinrichtung (8) zum Fördern von Wasser oder stromabwärts der Fördereinrichtung (8) zum Fördern von Wasser angeordnet ist.

5. Getränkebereiter nach einem der vorhergehenden Ansprüche, **dadurch gekennzeichnet, dass** der Getränkebereiter am ersten Heißwasserabgang (3) und/oder am mindestens einen zweiten Heißwasserabgang (4, 4a, 4b) jeweils eine Brüheinheit (11) zum Brühen von Kaffee oder eine Mixeinheit (12) zum Mischen von Wasser mit einem Feststoff, vorzugsweise Kakaopulver oder Suppenpulver, aufweist.

6. Getränkebereiter nach einem der Ansprüche 1 bis 5, **dadurch gekennzeichnet, dass** der Getränkebereiter
- einen zweiten Heißwasserabgang (4), einen zweiten Heißwasserpfad (7) und einen zweiten Durchflussmengenmesser (10), oder
- mehrere, bevorzugt zwei oder drei, zweite Heißwasserabgänge (4a, 4b), mehrere, bevorzugt zwei oder drei, zweite Heißwasserpfade (7a, 7b) und mehrere, bevorzugt zwei oder drei, zweite Durchflussmengenmesser (10a, 10b),
umfasst.

7. Getränkebereiter nach einem der vorhergehenden Ansprüche, **dadurch gekennzeichnet, dass** der Getränkebereiter ein Getränkeautomat zur Ausgabe mehrerer Heiß- und/oder Kaltgetränke, umfassend eine oder mehrere Kaffeespezialitäten, eine oder mehrere Teespezialitäten und/oder eine oder mehrere Trinksuppenspezialitäten, ist.

8. Verfahren zur Bestimmung von durch einen Getränkebereiter ausgegebenen und/oder in diesem zur Getränkebereitung verwendeten Heißwassermengen, wobei der Getränkebereiter ein Getränkebereiter gemäß einem der vorhergehenden Ansprüche ist und wobei mindestens eine durch einen der Heißwasserabgänge (3, 4, 4a, 4b) abgegebene und/oder an einem der Heißwasserabgänge (3, 4, 4a, 4b) zur Getränkebereitung verwendete Heißwassermenge bestimmt wird.

9. Verfahren nach Anspruch 8, **dadurch gekennzeichnet, dass** mindestens zwei zumindest teilweise gleichzeitig durch jeweils einen der Heißwasserabgänge (3, 4, 4a, 4b) abgegebene und/oder an jeweils einem der Heißwasserabgänge (3, 4, 4a, 4b) zur Getränkebereitung verwendete Heißwassermengen bestimmt werden.

10. Verfahren nach einem der Ansprüche 8 oder 9, **dadurch gekennzeichnet, dass** eine durch den mindestens einen zweiten Heißwasserabgang (4, 4a, 4b) abgegebene oder am mindestens einen zweiten Heißwasserabgang (4, 4a, 4b) zur Getränkebereitung verwendete Heißwassermenge dadurch bestimmt wird, dass mit dem mindestens einen zweiten Durchflussmengenmesser (10, 10a, 10b) die Menge an durch den mindestens einen zweiten Heißwasserpfad (7, 7a, 7b) fließendem Wasser gemessen wird.

11. Verfahren nach einem der Ansprüche 8 bis 10, **dadurch gekennzeichnet, dass** der erste Durchflussmengenmesser (9) im Kaltwasserpfad (5) angeordnet ist und eine durch den ersten Heißwasserabgang (3) abgegebene oder am ersten Heißwasserabgang (3) zur Getränkebereitung verwendete Heißwassermenge dadurch bestimmt wird, dass mit dem ersten Durchflussmengenmesser (9) die Menge an durch den Kaltwasserpfad (5) fließendem Wasser gemessen wird, mit dem mindestens einen zweiten Durchflussmengenmesser (10, 10a, 10b) die Menge an durch den mindesten einen zweiten Heißwasserpfad (7, 7a, 7b) fließendem Wasser bestimmt wird, und durch Bilden der Differenz aus der mit dem ersten Durchflussmengenmesser (9) gemessenen Menge an durch den Kaltwasserpfad (5) fließendem Wasser und der mit dem mindestens einen zweiten Durchflussmengenmesser (10, 10a, 10b) bestimmten Menge an durch den mindestens einen zweiten Heißwasserpfad (7, 7a, 7b) fließendem Wasser die Menge an durch den ersten Heißwasserpfad (6) fließendem Wasser ermittelt wird.

12. Verfahren nach dem vorhergehenden Anspruch, **dadurch gekennzeichnet, dass** der Getränkebereiter mehrere zweite Heißwasserabgänge (4a, 4b), mehrere zweite Heißwasserpfade (7a, 7b) und mehrere zweite Durchflussmengenmesser (10a, 10b) umfasst, wobei eine durch den ersten Heißwasserabgang (3) abgegebene oder am ersten Heißwasserabgang (3) zur Getränkebereitung verwendete Heißwassermenge dadurch bestimmt wird, dass mit dem ersten Durchflussmengenmesser (9) die Menge an durch den Kaltwasserpfad (5) fließendem Wasser gemessen wird, mit den zweiten Durchflussmengenmessern (10a, 10b) die Mengen an durch die zweiten Heißwasserpfade (7a, 7b) fließendem Wasser gemessen werden, und durch Bilden der Differenz aus der mit dem ersten Durchflussmengenmesser (9) gemessenen Menge an durch den Kaltwasserpfad (5) fließendem Wasser und der Summe der mit den zweiten Durchflussmengenmessern (10a, 10b) gemessenen Mengen an durch die zweiten Heißwasserpfade (7a, 7b) fließendem Wasser die Menge an durch den ersten Heißwasserpfad (6) fließendem Wasser ermittelt wird.

13. Verfahren nach einem der Ansprüche 8 bis 12, **dadurch gekennzeichnet, dass**, wenn nur eine Heißwassermenge durch den Getränkebereiter ausgegeben und/oder in diesem zur Getränkebereitung verwendet wird, welche dabei durch einen zweiten Heißwasserpfad (7, 7a, 7b) fließt, mindestens einer der Durchflussmengenmesser (9, 10, 10a, 10b) kalibriert wird, wobei hierbei mit dem ersten Durchflussmengenmesser (9), welcher im Kaltwasserpfad angeordnet ist, ein Messwert für die Menge an durch den Kaltwasserpfad (5) fließendem Wasser gemessen wird, mit dem in dem zweiten Heißwasserpfad (7, 7a, 7b), durch welchen die Heißwassermenge fließt, angeordneten Durchflussmengenmesser (10, 10a, 10b) ein Messwert für die Menge an durch diesen zweiten Heißwasserpfad (7, 7a, 7b) fließendem Wasser gemessen wird, und anschließend die beiden Messwerte miteinander verglichen werden.

14. Verwendung eines Getränkebereiters nach einem der Ansprüche 1 bis 7 zum Dosieren und/oder Ausgeben von Getränken, bevorzugt Heißgetränken, wobei vorzugsweise zwei oder mehr Getränke gleichzeitig oder zeitversetzt dosiert und/oder ausgegeben werden.

## Claims

1. A beverage maker for simultaneous dispensing of two or more hot beverages comprising a heating device (1) for heating water, a cold water inflow (2), a first hot water outlet (3), at least one second hot water outlet (4, 4a, 4b), a cold water path (5) connecting the cold water inflow (2) to the heating device (1), a first hot water path (6) connecting the heating device (1) to the first hot water outlet (3), at least one second hot water path (7, 7a, 7b) connecting the heating device (1) to the at least one second hot water outlet (4, 4a, 4b), with each second hot water outlet (4, 4a, 4b) being connected to the heating device (1) by a respective second hot water path (7, 7a, 7b), a conveying device (8) for conveying water, a first flow meter (9), and at least one second flow meter (10, 10a, 10b) that is arranged in the at least one second hot water path (7, 7a, 7b), with a respective second flow meter (10, 10a, 10b) being arranged in each second hot water path (7, 7a, 7b),
**characterized in that** the first flow meter (9) is arranged in the cold water path (5).

2. A beverage maker of the preceding claim, **characterized in that** at least one of the flow meters (10, 10a, 10b) arranged in a hot water path (6, 7, 7a, 7b), preferably every flow meter (10, 10a, 10b) arranged in a hot water path (6, 7, 7a, 7b), is a contactless flow meter, preferably an ultrasound flow meter or a magnetically inductive flow meter.

3. A beverage maker of any of the preceding claims, **characterized in that** the conveying device (8) for conveying water is arranged in the cold water path (5).

4. A beverage maker of any of the preceding claim, **characterized in that** the first flow meter (9) is arranged in the cold water path (5) upstream of the conveying device (8) for conveying water or downstream of the conveying device (8) for conveying water.

5. A beverage maker of any of the preceding claims, **characterized in that** the beverage maker has a respective brewing unit (11) for brewing coffee or a mixing unit (12) for mixing water with a solid, preferably cocoa powder or soup powder, at the first hot water outlet (3) and/or at the at least one second hot water outlet (4, 4a, 4b).

6. A beverage maker of any of the claims 1 to 5, **characterized in that** the beverage maker comprises
- a second hot water outlet (4), a second hot water path (7), and a second flow meter (10); or
- a plurality of second hot water outlets (4a, 4b), preferably two or three second hot water outlets, a plurality of second hot water paths (7a, 7b), preferably two or three hot water paths, and a plurality of second flow meters (10a, 10b), preferably two or three second flow meters.

7. A beverage maker one of any of the preceding claims, **characterized in that** the beverage maker is a beverage vending machine for dispensing a plurality of hot beverages and/or cold beverages comprising one or more specialty coffees, one or more specialty teas, and/or one or more specialty drinking soups.

8. A method of determining hot water amounts dispensed by a beverage maker and/or used in same for beverage preparation, wherein the beverage maker is a beverage maker one of any of the preceding claims; and wherein at least one hot water amount dispensed by one of the hot water outlets (3, 4, 4a, 4b) and/or used at one of the hot water outlets (3, 4, 4a, 4b) for beverage preparation is determined.

9. A method of claim 8, **characterized in that** at least two hot water amounts dispensed simultaneously at least at times by a respective one of the hot water outlets (3, 4, 4a, 4b) and/or used at a respective one of the hot water outlets (3, 4, 4a, 4b) for beverage preparation are determined.

10. A method of any of the claims 8 or 9, **characterized in that** a hot water amount dispensed by the at least one second hot water outlet (4, 4a, 4b) or used at the at least one second hot water outlet (4, 4a, 4b) for beverage preparation is determined **in that** the amount of water flowing through the at least one second hot water path (7, 7a, 7b) is measured by the at least one second flow meter (10, 10a, 10b).

11. A method of any of the claims 8 to 10, **characterized in that** the first flow meter (9) is arranged in the cold water path (5) and a hot water amount dispensed by the first hot water outlet (3) or used at the first hot water outlet (3) for beverage preparation is determined **in that** the amount of water flowing through the cold water path (5) is measured by the first flow meter (9), the amount of water flowing through the at least one second hot water path (7, 7a, 7b) is determined by the at least one second flow meter (10, 10a, 10b), and the amount of water flowing through the first hot water path (6) is determined by forming the difference from the amount of water flowing through the cold water path (5) measured by the first flow meter (9) and the amount of water flowing through the at least one second hot water path (7, 7a, 7b) determined by the at least one second flow meter (10, 10a, 10b).

12. A method of the preceding claim, **characterized in that** the beverage maker has a plurality of second hot water outlets (4a, 4b), a plurality of second hot water paths (7a, 7b), and a plurality of second flow meters (10a, 10b), with a hot water amount dispensed by the first hot water outlet (3) or used at the first hot water outlet (3) for beverage preparation being determined **in that** the amount of water flowing through the cold water path (5) is measured by the first flow meter (9), the amounts of water flowing through the second hot water paths (7a, 7b) being measured by the second flow meters (10a, 10b), and the amount of water flowing through the first hot water path (6) being determined by forming the difference from the amount of water flowing through the cold water path (5) measured by the first flow meter (9) and the sum of the amounts of water flowing through the second hot water paths(7a, 7b) measured by the second flow meters (10a, 10b).

13. A method of any of the claims 8 to 12, **characterized in that**, if only one hot water amount is dispensed by the beverage maker and/or is used in same for beverage preparation, said hot water amount flowing through a second hot water path (7, 7a, 7b) here, at least one of the flow meters (9, 10, 10a, 10b) is calibrated, with here a measurement value for the amount of water flowing through the cold water path (5) being measured by the first flow meter (9), a measurement value for the amount of water flowing through this second hot water path (7, 7a, 7b) being measured by the flow meter (10, 10a, 10b) arranged in said second hot water path (7, 7a, 7b) through which the hot water amount flows, and the two measurement values are subsequently compared with one another.

14. Use of a beverage maker of any of the claims 1 to 7 for metering and/or dispensing beverages, preferably hot beverages, wherein two or more beverages are preferably metered and/or dispensed simultaneously or with a time delay.

## Revendications

1. Appareil préparateur de boissons pour la distribution simultanée de deux boissons chaudes ou plus comprenant un dispositif de chauffage (1) pour le chauffage d'eau, une arrivée d'eau froide (2), une première sortie d'eau chaude (3), au moins une deuxième sortie d'eau chaude (4, 4a, 4b), un canal d'eau froide (5) reliant l'arrivée d'eau froide (2) avec le dispositif de chauffage (1), un premier canal d'eau chaude (6) reliant le dispositif de chauffage (1) avec la première sortie d'eau chaude (3), au moins un deuxième canal d'eau chaude (7, 7a, 7b) reliant le dispositif de chauffage (1) avec l'au moins une deuxième sortie d'eau chaude (4, 4a, 4b), dans lequel chaque deuxième sortie d'eau chaude (4, 4a, 4b) est reliée avec le dispositif de chauffage (1) par l'intermédiaire d'un deuxième canal d'eau chaude (7, 7a, 7b), un dispositif de transport (8) pour le transport de l'eau, un premier débitmètre (9) et au moins un deuxième débitmètre (10, 10a, 10b) qui est disposé dans l'au moins un deuxième canal d'eau chaude (7, 7a, 7b), dans lequel, dans chaque deuxième canal d'eau chaude (7, 7a, 7b) est disposé un deuxième débitmètre (10, 10a, 10b),
**caractérisé en ce que** le premier débitmètre (9) est disposé dans le canal d'eau froide (5).

2. Appareil préparateur de boissons selon la revendication précédente, **caractérisé en ce qu'**au moins un des débitmètres (10, 10a, 10b) disposés dans un canal d'eau chaude (6, 7, 7a, 7b), de préférence chaque débitmètre (10, 10a, 10b) disposé dans un canal d'eau chaude (6, 7, 7a, 7b) est un débitmètre sans contact, de préférence un débitmètre à ultrasons ou un débitmètre magnétique-inductif.

3. Appareil préparateur de boissons selon l'une des revendications précédentes, **caractérisé en ce que** le dispositif de transport (8) pour le transport de l'eau est disposé dans le canal d'eau froide (5).

4. Appareil préparateur de boissons selon la revendication précédente, **caractérisé en ce que** le deuxième débitmètre (9) est disposé dans le canal d'eau froide (5) en amont du dispositif de transport (8) pour le transport de l'eau ou en aval du dispositif de transport (8) pour le transport de l'eau.

5. Appareil préparateur de boissons selon l'une des revendications précédentes, **caractérisé en ce que** l'appareil préparateur de boissons comprend, au niveau de la première sortie d'eau chaude (3) et/ou au niveau de l'au moins une deuxième sortie d'eau chaude (4, 4a, 4b), une unité d'infusion (11) pour l'infusion de café ou une unité de mélange (12) pour le mélange d'eau avec une substance solide, de préférence une poudre de cacao ou une poudre de soupe.

6. Appareil préparateur de boissons selon l'une des revendications 1 à 5, **caractérisé en ce que** l'appareil préparateur de boissons comprend
- une deuxième sortie d'eau chaude (4), un deuxième canal d'eau chaude (7) et un deuxième débitmètre (10) ou
- plusieurs, de préférence deux ou trois, deuxièmes sorties d'eau chaude (4a, 4b), plusieurs, de préférence deux ou trois, deuxièmes canaux d'eau chaude (7a, 7b) et plusieurs, de préférence deux ou trois, deuxièmes débitmètres (10a, 10b).

7. Appareil préparateur de boissons selon l'une des revendications précédentes, **caractérisé en ce que** l'appareil préparateur de boissons est un distributeur automatique de boissons pour la distribution de plusieurs boissons chaudes et/ou froides, y compris une ou plusieurs spécialités à base de café, une ou plusieurs spécialités à base de thé et/ou une ou plusieurs spécialités à base de soupe.

8. Procédé de détermination des quantités d'eau chaude distribuées par un appareil préparateur de boissons et/ou utilisées dans celui-ci pour la préparation de boissons, dans lequel l'appareil préparateur de boissons est un appareil préparateur de boissons selon l'une des revendications précédentes et dans lequel au moins une quantité d'eau chaude distribuée à travers une des sorties d'eau chaude (3, 4, 4a, 4b) et/ou utilisée au niveau d'une des sorties d'eau chaude (3, 4, 4a, 4b) pour la préparation de boissons, est déterminée.

9. Procédé selon la revendication 8, **caractérisé en ce qu'**au moins deux quantités d'eau chaude distribuées au moins partiellement simultanément à travers au moins une des sorties d'eau chaude (3, 4, 4a, 4b) et/ou utilisées au niveau d'une des sorties d'eau chaude (3, 4, 4a, 4b) pour la préparation de boissons, sont déterminées.

10. Procédé selon la revendication 8 ou 9, **caractérisé en ce qu'**une quantité d'eau chaude distribuée à travers de l'au moins une deuxième sortie d'eau chaude (4, 4a, 4b) ou utilisée au niveau d'au moins une deuxième sortie d'eau chaude (4, 4a, 4b) pour la préparation de boissons est déterminée grâce au fait que, avec l'au moins un deuxième débitmètre (10, 10a, 10b), la quantité d'eau s'écoulant à travers l'au moins un deuxième canal d'eau chaude (7, 7a, 7b) est mesurée.

11. Procédé selon l'une des revendications 8 à 10, **caractérisé en ce que** le premier débitmètre (9) est disposé dans le canal d'eau froide (5) et une quantité d'eau chaude distribuée à travers la première sortie d'eau chaude (3) ou utilisée au niveau de la première sortie d'eau chaude (3) pour la préparation de boissons est déterminée grâce au fait que, avec le premier débitmètre (9), la quantité d'eau s'écoulant à travers le canal d'eau froide (5) est mesurée, avec l'au moins un deuxième débitmètre (10, 10a, 10b), la quantité d'eau s'écoulant à travers l'au moins un deuxième canal d'eau chaude (7, 7a, 7b) est déterminée et le calcul de la différence entre la quantité d'eau s'écoulant à travers le canal d'eau froide (5), mesurée avec le premier débitmètre (9), et la quantité d'eau s'écoulant à travers l'au moins un deuxième canal d'eau chaude (7, 7a, 7b), déterminée avec l'au moins un deuxième débitmètre (10, 10a, 10b), permet de déterminer la quantité d'eau s'écoulant à travers le premier canal d'eau chaude (6).

12. Procédé selon la revendication précédente, **caractérisé en ce que** l'appareil préparateur de boissons comprend plusieurs deuxièmes sorties d'eau chaude (4a, 4b), plusieurs deuxièmes canaux d'eau chaude (7a, 7b) et plusieurs deuxièmes débitmètres (10a, 10b), dans lequel une quantité d'eau distribuée à travers la première sortie d'eau chaude (3) ou utilisée au niveau de la première sortie d'eau chaude (3) pour la préparation de boissons est déterminée grâce au fait que, avec le premier débitmètre (9), la quantité d'eau s'écoulant à travers le canal d'eau froide (5) est mesurée, avec les deuxièmes débitmètres (10a, 10b), les quantités d'eau s'écoulant à travers les deuxièmes canaux d'eau chaude (7a, 7b) sont mesurées et le calcul de la différence entre la quantité d'eau s'écoulant à travers le canal d'eau froide (5) mesurée avec le premier débitmètre (9) et la somme des quantités d'eau s'écoulant à travers les deuxièmes canaux d'eau chaude (7a, 7b), mesurées avec les deuxièmes débitmètres (10a, 10b) permet de déterminer la quantité d'eau s'écoulant à travers le premier canal d'eau chaude (6).

13. Procédé selon l'une des revendications 8 à 12, **caractérisé en ce que**, lorsque seulement une quantité d'eau chaude est distribuée par l'appareil préparateur de boissons et/ou est utilisé dans celui-ci pour la préparation de boissons, qui s'écoule à travers un deuxième canal d'eau chaude (7, 7a, 7b), au moins un des débitmètres (9, 10, 10a, 10b) est étalonné, dans lequel, avec le premier débitmètre (9), qui est disposé dans le canal d'eau froide, une valeur de mesure pour la quantité d'eau s'écoulant à travers le canal d'eau froide (5) est mesurée, avec le débitmètre (10, 10a, 10b) disposé dans le deuxième canal d'eau chaude (7, 7a, 7b), à travers lequel la quantité d'eau chaude s'écoule, une valeur de mesure pour la quantité d'eau s'écoulant à travers ce deuxième canal d'eau chaude (7, 7a, 7b) est mesurée, puis les deux valeurs de mesure sont comparées.

14. Utilisation d'un appareil préparateur de boissons selon l'une des revendications 1 à 7 pour le dosage et/ou la distribution de boissons, de préférence de boissons chaudes, dans lequel, de préférence, deux boissons ou plus sont dosées et/ou distribuées simultanément ou de manière décalée dans le temps.
